# EUROPEAN PATENT SPECIFICATION

(11) **EP 2 054 658 B1**
(45) Date of publication and mention of the grant of the patent: **20.07.2011**
(21) Application number: 07786601.0
(22) Date of filing: 07.08.2007
(51) Int. Cl.: F16L 15/06, F16L 15/04

(54) **COMPOSABLE PIPEWORK HAVING A PLURALITY OF MODULAR TUBULAR DUCTS**
ZUSAMMENSETZBARE ROHRLEITUNGEN MIT MEHREREN MODULAREN RÖHRENFÖRMIGEN KANÄLEN
TUYAUTERIES COMPOSABLES COMPORTANT UNE PLURALITÉ DE CANALISATIONS TUBULAIRES MODULAIRES

(30) Priority: 07.08.2006 EP 06016420
(43) Date of publication of application: 06.05.2009
(73) Proprietor: BEZA S.p.A., 37057 San Giovanni Lupatoto (VR) (IT)
(72) Inventor: BEGHINI, Claudio, I-37057 San Giovanni Lupatoto (VR) (IT)
(74) Representative: Zardi, Marco
(86) International application number: PCT/EP2007/006971
(87) International publication number: WO 2008/017454

(56) References cited:
- EP-A- 1 092 906
- WO-A2-2004/005665
- US-E- R E34 467

## Description

### Field of application

The present invention refers, in its broadest aspect, to a composable pipework having a plurality of modular tubular ducts interconnected by means of a head-tail connecting system providing a hermetic, fluid-tight seal, wherein hermetic sealing means are provided in each head-tail connection of said tubular ducts (WO 2004/005665).

In the present patent application, the expression "tubular duct" means any element of a composable pipework that is capable of carrying a fluid between at least two of its ends, for example a rectilinear tube, a curvilinear tube, a "T" and "Y" joint, a tube with an inspection door.

More particularly, the invention refers to a composable pipework of the above-mentioned type, each tubular duct comprising at least two ends equipped with respective threads capable of allowing said hermetic seal, head-tail connection through screwing.

In a particularly preferred application, the invention refers to the technical field of composable pipeworks or piping systems for use in civil and thermo-hydraulic engineering, especially flue pipes. The term "flue pipe" will be used in the rest of the description with reference to a flue pipe, stack or chimney.

### Prior Art

In relation to the composable pipeworks of the above-mentioned type, consisting of a plurality of head-tail connected modular tubular ducts, there is a well-known need that each connection be capable of ensuring both a preset mechanical seal and a preset hermetic seal.

In other words, the connection between two adjacent modular tubular ducts must withstand preset mechanical stress (mechanical seal) over time, for example traction, compression and flexion, and must be capable of maintaining over time a preset, positive or negative, difference in pressure between the inside and the outside of the two connected tubular ducts (hermetic seal).

In order to ensure mechanical seal, the head-tail connection between two adjacent modular tubular ducts is carried out by means of two respective threads.

More precisely, each modular tubular duct provides a male threaded end and an opposed female threaded end, of conjugate dimensions so that the two tubular ducts may easily and quickly be connected, by screwing the male threaded end of a first tubular duct into the female thread of a second tubular duct.

In order to ensure the hermetic seal, in each connection between two adjacent tubular ducts, gaskets of various types are provided, according to the applications (transport of a liquid, of a gas or both), the difference in pressure between the inside and the outside of the pipework in operation and the viscosity of the liquid possibly transported.

In general, said gaskets are ring-shaped, in an adequate plastic material, and are housed in respective seats, of the male end for example. When the male threaded end of a first tubular duct is fully screwed into the female thread of a second tubular duct, the gasket - placed between the outside of the male end of the first tubular duct and the inside of the female end of the second tubular duct - turns out to be in pressure contact against opposite walls of the two connected tubular ducts.

Although advantageous from different points of view, a composable pipework having a plurality of modular tubular ducts structured in the above schematically described manner, has known drawbacks, among which the main one is that, in order to ensure the wanted hermetic seal, maximum care must be taken so that the male end of each tubular duct is fully screwed into the female end of the tubular duct connected to it.

A further disadvantage of the composable pipework of the prior art is that the dimensions of the individual modular ducts must be studied and made accurately during the design and manufacture phases that precede the laying of the pipework itself, and in practice deviations from the designed arrangement are not allowed.

### Summary of the invention

The technical problem underlying the present invention is to devise and provide a composable pipework having a plurality of modular tubular ducts of the considered type, capable of meeting the above-mentioned need, allowing at the same time great ease and versatility of assembly between the modular tubular ducts, in order to overcome, in an easy and economical manner, the limitations and the drawbacks mentioned in reference to the prior art.

According to one aspect of the present invention, there is provided a composable pipework having a plurality of modular tubular ducts interconnected by a hermetic seal, head-tail connection, comprising a plurality of modular tubular ducts and hermetic sealing means provided in each head-tail connection of said tubular ducts, each tubular duct comprising at least two ends equipped with respective threads capable of allowing said hermetic seal, head-tail connection through screwing, characterized in that, at said head-tail, hermetic seal connections, the respective tubular ducts are rotatable between themselves through screwing.

According to another aspect of the invention, the composable pipework is characterized in that a first of said threaded ends, so-called female end, of a first of said modular tubular ducts comprises an internally smooth cylindrical mouth, of preset axial length, followed by the respective thread, said mouth having an inside diameter greater than the maximum outside diameter of a second of said threaded ends, so-called male end, of an adjacent second of said modular tubular ducts, head-tail connected to said first modular tubular duct, said hermetic sealing means being arranged on said male end, in a position that follows the respective thread, in order to achieve said hermetic seal between a position of minimum screwing and a position of maximum screwing of said adjacent modular tubular ducts by means of pressure contact against the inside of said cylindrical mouth of the female end.

More in detail, according to the invention, there is provided a composable pipework according to claim 1, which comprises inter alea comprising a plurality of modular ducts with a fluid-tight connecting system, wherein each one of said modular ducts has a male coupling part and a female coupling part, having respective threaded portions adapted to provide a mechanical engagement between modular ducts, characterized in that it comprises sealing means adapted to provide a hermetic seal between the male coupling part of a generic first modular duct and the female coupling part of a second modular duct connected to said first modular duct, and adapted to maintain said hermetic seal between a position of minimum screwing and a position of maximum screwing of the male part of the first modular duct into the female part of the second module.

In a preferred embodiment, the sealing means are associated with the male coupling part of each modular ducts.

Still more preferably, the sealing means are located at the root of the threaded portion of the male part of each module, i.e. between a central body portion of the module and said male threaded portion.

According to a preferred embodiment, the male coupling part of each modular duct comprises a threaded portion and sealing means between the threaded portion and a central body portion; the female coupling part of each modular duct has an open end to receive the male coupling part of another modular duct, a first cylindrical portion with internal smooth surface, and a second, inner threaded portion adapted to engage the treaded portion of said male coupling part; said sealing means are adapted to provide hermetic sealing by pressure contact against said internal smooth surface, between a position of minimum screwing and a position of maximum screwing of said male part into said female part.

Preferably, said hermetic sealing means comprise an annular gasket.

Preferably, the tubular ducts are rotatable by at least 270°, more preferably by 360°.

In a preferred embodiment of the invention, the above described composable pipework is a composable flue pipe for civil and thermo-hydraulic engineering.

Hence, an aspect of the invention is the provision of a flue pipe having a composable pipework as above.

Another aspect of the invention is a connecting system for modular ducts of a composable pipework, especially a flue pipe as above described.

Another aspect of the invention is a module for a composable pipework, especially for a flue pipe as above described, having the above connecting system for fluid-tight engagement with other modules, said system being adapted to provide a fluid-tight seal between a position of minimum screwing and a position of maximum screwing of the male part of a first module into the female part of a second module connected to said first module.

Further characteristics and the advantages of the invention will result from the description below of a preferred embodiment thereof, provided for indicating and not limiting purposes with reference to the attached drawings.

### Brief description of the drawings

Figure 1 schematically represents a side elevation view of a first embodiment of a modular tubular duct being part of the composable pipework according to the invention.
Figure 2 schematically represents a side elevation view of two of the modular tubular ducts of figure 1, in a head-tail mutual approach phase.
Figure 3 schematically represents a side elevation view of two of the modular tubular ducts of figure 1, in a position of minimum mutual screwing, in mechanical and hermetic seal.
Figure 4 schematically represents a side elevation view of two of the modular tubular ducts of figure 1, in a position of maximum mutual screwing, in mechanical and hermetic seal.
Figure 5 schematically represents a side elevation view, partially sectioned, of a second embodiment of a modular tubular duct being part of the composable pipework according to the invention.
Figure 6 schematically represents a side elevation view of a third embodiment of a modular tubular duct being part of the composable pipework according to the invention.
Figure 7 schematically represents a side elevation view of a fourth embodiment of a modular tubular duct being part of the composable pipework according to the invention.

### Detailed description of a preferred embodiment

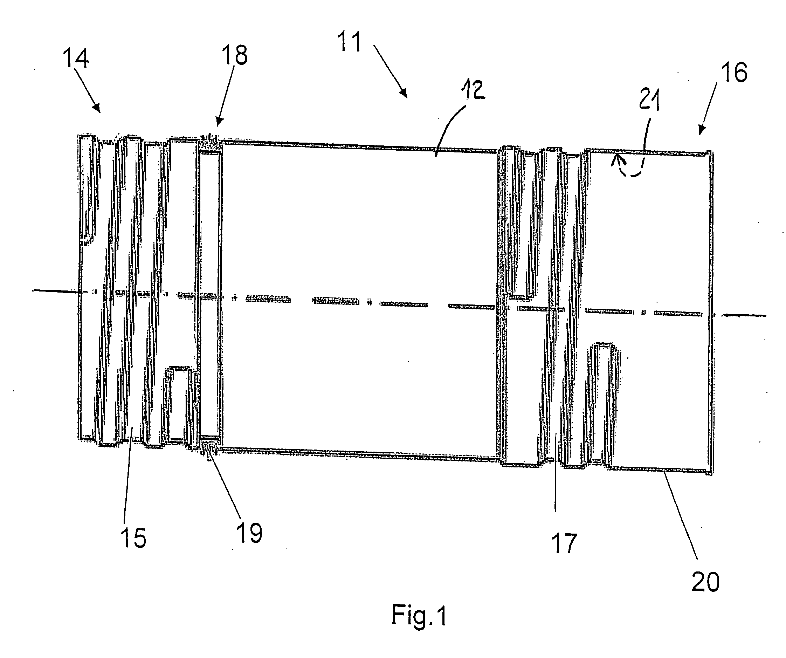

Initially referring to figures 1-4, a first embodiment of a modular tubular duct is shown, which is indicated by 11 and is part of a composable pipework according to the invention, globally indicated by 10.

In a preferred application of the invention, the pipework 10 is a flue pipe, e.g. a single or double-walled stainless steel flue pipe.

Each tubular duct 11 comprises a male end 14 having a respective thread 15 and/or a female end 16 having a respective thread 17.

More precisely, the duct 11 of figures 1-4 is a rectilinear tube which comprises a male end 14 and an opposed female end 16.

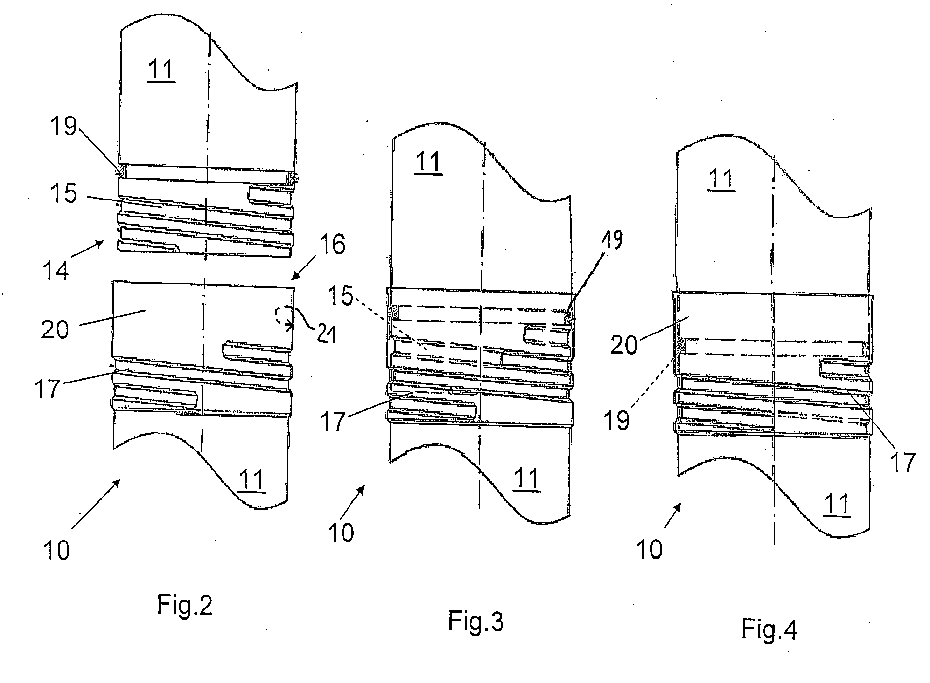

The above-mentioned threads 15 and 17 are conjugate and capable of allowing a head-tail connection between adjacent modular tubular ducts 11 (figures 3 and 4) through screwing.

Hermetic sealing means 18 are associated with each head-tail connection between said adjacent ducts 11.

According to one aspect of the present invention, the female end 16 comprises an internally smooth cylindrical mouth or open end 20, of preset axial length, followed by the respective inner thread 17, said mouth 20 having an inside diameter greater than the maximum outside diameter of said male end 14.

Furthermore, according to a further aspect of the present invention, the hermetic sealing means 18 are arranged on said male end 14, in a position that follows the respective thread 15, in order to achieve said hermetic seal between a position of minimum screwing and a position of maximum screwing of said adjacent ducts 11 by means of pressure contact against the inside of said cylindrical mouth 20 of the female end 16.

More in detail, as seen from Fig. 1, the modular duct 11 has a body portion 12 and the sealing means 18 are provided at the root of the thread 15, between said thread 15 and said body portion 12.

The open end 20 of the female portion 16, adapted to receive the male portion of another module, has an internal smooth surface 21, and dimensions of the sealing means 18 and open end 20 of the modules are such as the sealing means 18 of a module can provide a fluid-tight seal against the surface 21 of another module.

As seen from Figs. 3 and 4, said sealing means 18 are adapted to provide a fluid-tight seal between two adjacent modules 11, irrespective of the male part being more o less screwed to the female part. Hence, the fluid-tight seal is assured between a position of minimum screwing and a position of maximum screwing of the male part into the female part of adjacent, connected modules.

In general, the pipework 10 has a plurality of ducts 11 interconnected by means of a hermetic seal, head-tail connection and comprises a plurality of modular tubular ducts 11 and hermetic sealing means 18 provided in each head-tail connection of said tubular ducts 11. Each tubular duct 11 comprises at least two ends, 14 and 16, equipped with respective threads, 15 and 17, capable of allowing said hermetic seal, head-tail connection through screwing.

According to the present invention, at said hermetic seal, head-tail connections, the respective tubular ducts 11 are rotatable between themselves through screwing.

Preferably, said respective tubular ducts 11 are rotatable by at least 270°, preferably at least 360° between the positions of minimum and maximum screwing, maintaining the fluid-tight seal.

In the non-limiting example shown in figures 1-4, the mechanical seal is achieved by screwing the male end 14 into the female end 16 through a 360° angle, and a further 360° rotation is still allowed.

According to a first embodiment of the present invention, shown in figures 1-4, the above-mentioned hermetic sealing means 18 comprise an annular gasket 19 worn and detained on said male end 14.

Preferably, the annular gasket 19 is positioned at a distance from the edge of the male end 14 of the respective modular tubular duct 11 substantially equal to the axial length of said mouth 20 of the female end 16 of the adjacent modular tubular duct 11.

In this manner, the annular gasket 19 of a first modular tubular duct 11 turns out to be maintained under pressure on the internally smooth cylindrical mouth 20 of the female end 16 of a second modular tubular duct 11 adjacently connected, from a minimum mutual screwing configuration of said adjacent modular tubular ducts 11 (figure 3), up to the maximum mutual screwing configuration of said adjacent modular tubular ducts 11 (figure 4).

Preferably, the annular gasket 19 is housed in an adequate circumferential seat provided on the external wall of said male end 14, substantially close to the respective thread 15.

The annular gasket 19 has such dimensions that it turns out to be projecting compared to the maximum outside diameter of said male end 14: more precisely, the annular gasket 19 has an outside diameter greater than the inside diameter of the internally smooth cylindrical mouth 20 of the female end 16.

Furthermore, the annular gasket 19 is made of a elastically deformable material, for example a plastic material or high-temperature, condensate-resistant silicone rubber, so that - in the head-tail connection of two tubular ducts 11 - a part of it is elastically deformed and is maintained under pressure against the inside of said internally smooth cylindrical mouth 20.

In the example of figures 1-4, the annular gasket 19 provides three circumferential ribs in a elastically deformable material, for example a plastic material or high-temperature, condensate-resistant silicone rubber, said three circumferential ribs having an outside diameter greater than the inside diameter of the internally smooth cylindrical mouth 20 to ensure the pressure seal. Obviously, the number of the circumferential ribs of the annular gasket 19 may vary depending on the operating conditions, and in some cases it is enough to provide even just one circumferential rib of the above-mentioned type. In alternative, the annular gasket 19 has a circular cross section.

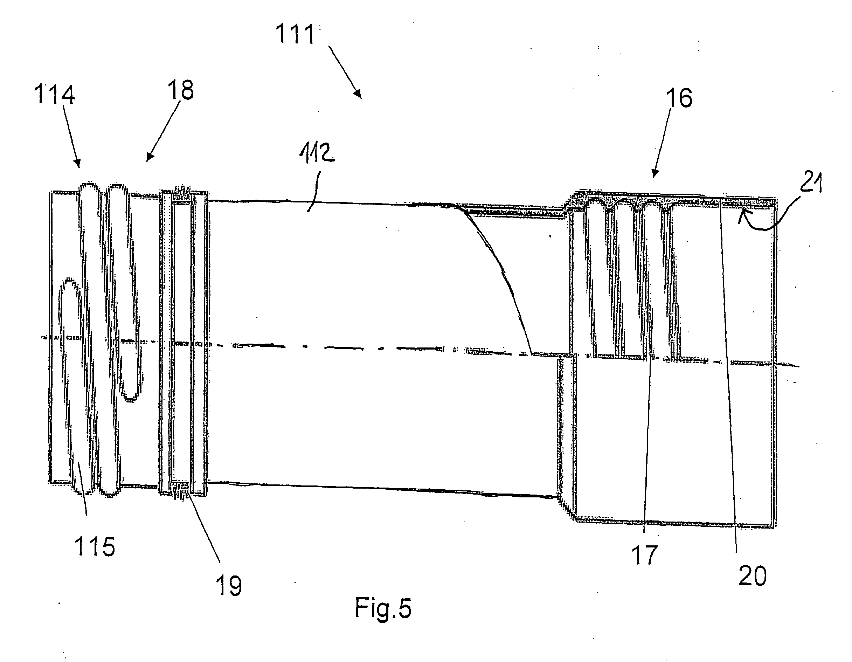

Figs. 5 to 7 relate to further example of modular ducts having a connecting system according to the invention. The figures show modular ducts 111, 211 and 311 having respective body portions 112, 212, 312 and male/female portions as above described. Structural elements identical or equivalent from a functional point of view to those of the above described duct 11 of figures 1-4, have the same reference numerals as above, and will not be further described.

Referring to Fig. 5, a second embodiment of a modular tubular duct is shown, which is indicated by 111 and is part of a composable pipework according to the invention. In figure 5, to The duct 111 differs from the duct 11 only by the fact that the thread 115 of the male end 114 is formed outside the male end 114 itself, i.e. the bottom of the thread 115 has a diameter for example substantially equal to the outside diameter of the portion of the male end 114 without thread 115, while the thread 15 of the male end 14 is formed in the thickness of the male end 14 itself, i.e. the bottom of the thread 15 has a diameter lesser than the outside diameter of the male end 14.

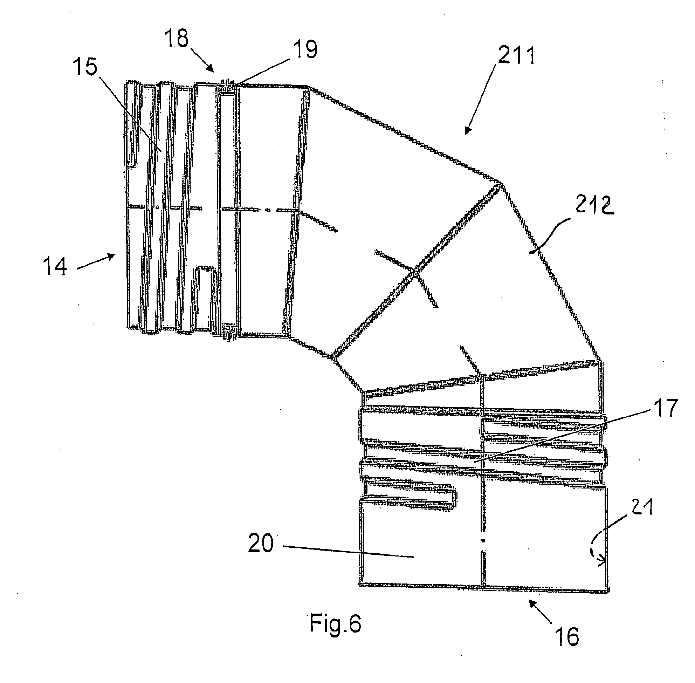

In figure 6 a third embodiment of a modular tubular duct is shown, which is indicated by 211 and is part of a composable pipework according to the invention. In figure 6, to structural elements identical or equivalent from a functional point of view to those of the above-described tubular duct 11 of figures 1-4, the same reference numerals will be assigned and these will not be further described. The tubular duct 211 differs from the tubular duct 11 only by the fact that the duct 11 is rectilinear, while the duct 211 is curvilinear, in particular the axes of the male 14 and female 16 ends of the tubular duct 211 are - in the non-limiting example of figure 6 - orthogonal between themselves.

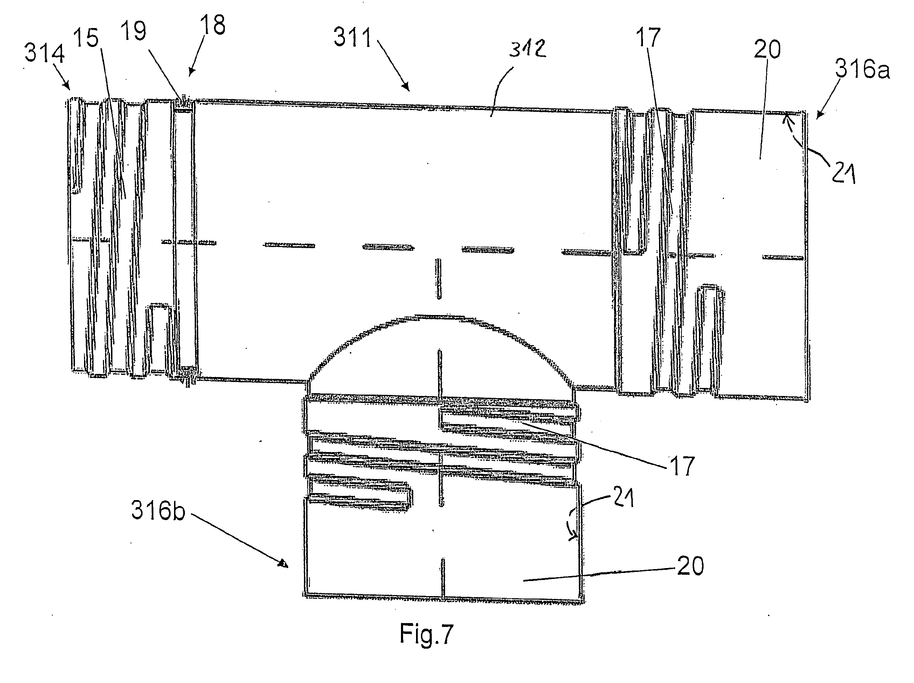

In figure 7 a fourth embodiment of a modular tubular duct is shown, which is indicated by 311 and is part of a composable pipework according to the invention. In figure 7, to structural elements identical or equivalent from a functional point of view to those of the above-described duct 11 of figures 1-4, the same reference numerals will be assigned and these will not be further described.

The duct 311 differs from the duct 11 by the fact that it is a "T" joint, therefore equipped with three ends, while the element 11 is a tube, therefore equipped with two ends.

In particular, the duct 311 has two female ends (316a and 316b) and one male end 314, which are structurally identical to those of the duct 11.

The present invention also refers to the modular tubular ducts 11, 111, 211 and 311 of the above-described type.

From the preceding description, it can clearly be seen that the composable pipework according to the invention solves the technical problem and achieves numerous advantages.

The main advantage is that easy and versatile assembly between the adjacent elements of the pipework itself is allowed.

In fact, thanks to the characteristic of being able to rotate, through screwing, the adjacent tubular ducts at the hermetic seal, head-tail connections, by screwing more or less the male end of a tubular duct into the female end of an adjacent duct, in practice it is possible to increase or respectively decrease the effective laying length of the tubular ducts, the hermetic seal of the connection being ensured in any case.

Tubular ducts can be freely orientated with respect to each other, by means of the mutual screwing, thus allowing making pipeworks with a high degree of flexibility. For example, it is possible to lay the pipework without having conducted an accurate survey of the environment where the pipework itself is to be positioned, and the tubular ducts may have relatively broad manufacturing tolerances on the length, thus reducing production costs. In particular, the above-mentioned orientability is very advantageous when rectilinear tubes must be connected to curvilinear fitting tubes, or rectilinear tubes with other modular tubular ducts such as "T" joints and "Y" joints.

It should be appreciated that one aspect of the invention is the provision of separate means for the mechanical seal and fluid-tight seal, i.e. the threaded connection and the sealing means respectively, so that two adjacent modules can be freely screwed or unscrewed, in order to correctly position the pipework, without affecting the fluid-tight seal, contrary to prior-art system wherein a hermetic seal require the male portion to be fully screwed into the female portion.

It should also be noted that above advantages are particularly relevant for a composable flue pipe in a building or industrial premise, wherein the flue pipe must follow a predetermined lay-out. The possibility to freely rotate the modular ducts, especially non-rectilinear parts such as T- or Y-joints, between said positions of minimum and maximum screwing, without affecting the fluid-tight seal, gives greatly enhanced flexibility in the laying of the flue pipe.

A further advantage is that the cylindrical mouth or open end of the female part, besides cooperating to the hermetic seal of the head-tail connection between two tubular ducts, has a function of guiding the male end of the tubular duct to be connected.

Of course, a man skilled in the art can make numerous modifications and variants to the composable pipework, having a plurality of modular tubular ducts, described above in order to satisfy specific and contingent needs, all of which are in any case covered by the scope of protection of the present invention as defined by the following claims.

## Claims

1. A composable pipeworks, comprising a plurality of modular ducts (11, 111, 211, 311) with a fluid-tight connecting system, wherein each one of said modular ducts has a male coupling part (14) and a female coupling part (16), having a respective male threaded portion (15) and female threaded portion (17) adapted to provide a mechanical engagement between modular ducts, **characterized in that** it comprises sealing means (18) adapted to provide a fluid-tight seal between the male coupling part (14) of a generic first modular duct and the female coupling part (16) of a second modular duct connected to said first modular duct, and adapted to maintain said fluid-tight seal between a position of minimum screwing and a position of maximum screwing of the male part (14) of said first modular duct into the female part (16) of said second modular duct, and wherein two adjacent modules can be freely rotated at the fluid-tight connection, between said positions of maximum and minimum screwing, without affecting the fluid-tightness.

2. A composable pipework according to claim 1, wherein said sealing means (18) are associated with the male coupling part (14) of each modular duct.

3. A composable pipework according to claim 2, wherein said sealing means (18) are located at the root of the threaded portion (15) of the male part (14) of each modular duct (11, 111, 2.11, 311), between a central body portion (12, 112, 212, 312) of the modular duct and said threaded portion (15) of the same.

4. A composable pipework according to claim 2 or 3, wherein the female coupling part (16) of each modular duct has an open end (20) to receive the male coupling part (14) of another modular duct, a first cylindrical portion with internal smooth surface (21), and a second, inner threaded portion (17) adapted to engage the treaded portion (15) of said male coupling part; said sealing means (18) being adapted to provide a fluid-tight seal by pressure contact against said internal smooth surface (21) of the female portion (16), between a position of minimum screwing and a position of maximum screwing of said male part (14) into said female part (16).

5. A composable pipework according to any one of preceding claims, wherein said hermetic sealing means (18) comprise an annular gasket (19).

6. Composable pipework (10) according to claim 5, wherein said annular gasket (19) is made of an elastically deformable material, preferably a plastic material or high-temperature, condensate-resistant silicone rubber.

7. Composable pipework (10) according to claim 6, wherein said annular gasket (19) has at least one circumferential rib, said rib having an outside diameter greater than the inside diameter of the female open end (20).

8. Composable pipework (10) according to any one of preceding claims, wherein the thread (15) of the male part (14) of said modular tubular ducts (11, 211) is formed in the thickness of the male end (14) itself, the bottom of said thread (15) having a diameter lesser than the outside diameter of the male end (14).

9. Composable pipework (10) according to any one of claims 1 to 7, wherein the thread (115) of the male coupling part (114) is formed outside the male part (114) itself.

10. Composable pipework according to any one of preceding claims, wherein the male coupling part (14) of a modular duct can be screwed into the female part (16) of another modular duct, between said position of minimum screwing and said position of maximum screwing, by an angle of at least 270°, preferably

11. Composable pipework according to any one of preceding claims, wherein said composable pipework is a flue pipe.

## Patentansprüche

1. Zusammensetzbare Rohrleitung, umfassend eine Vielzahl von modularen Leitungen (11, 111, 211, 311) mit einem fluiddichten Verbindungssystem, wobei eine jede der modularen Leitungen einen männlichen Verbindungsteil (14) und einen weiblichen Verbindungsteil (16) mit einem jeweiligen männlichen Gewindeabschnitt (15) und weiblichen Gewindeabschnitt (17) aufweist, die so ausbildet sind, dass eine mechanische Bindung zwischen den modularen Leitungen bereitgestellt wird, **dadurch gekennzeichnet, dass** sie Dichtungsmittel (18) umfasst, die so ausgebildet sind, dass eine fluiddichte Abdichtung zwischen dem männlichen Verbindungsteil (14) einer generischen ersten modularen Leitung und dem weiblichen Verbindungsteil (16) einer zweiten, mit der ersten modularen Leitung verbundenen modularen Leitung bereitgestellt wird und, die so ausgebildet ist, dass die fluiddichte Abdichtung zwischen einer minimalen Verschraubungsposition und einer maximalen Verschraubungsposition des männlichen Teils (14) der ersten modularen Leitung in den weiblichen Teil (16) der zweiten modularen Leitung erhalten wird und, wobei die zwei angrenzenden Module an der fluiddichten Verbindung zwischen der maximalen und der minimalen Verschraubungsposition frei drehbar sein können, ohne dass die Fluiddichtigkeit beeinträchtigt wird.

2. Zusammensetzbare Rohrleitung gemäß Anspruch 1, wobei die Dichtungsmittel (18) mit dem männlichen Verbindungsteil (14) einer jeden Leitung verbunden sind.

3. Zusammensetzbare Rohrleitung gemäß Anspruch 2, wobei sich die Dichtungsmittel (18) am Beginn des Gewindeabschnitts (15) des männlichen Teils (14) einer jeden Leitung (11, 111, 211, 311), zwischen einem zentralen Körperabschnitt (12, 112, 212, 312) der modularen Leitung und dem Gewindeabschnitt (15) derselben Leitung befinden.

4. Zusammensetzbare Rohrleitung gemäß Anspruch 2 oder 3, wobei der weibliche Verbindungsteil (16) einer jeden Leitung ein offenes Ende (20) zur Aufnahme des männlichen Verbindungsteils (14) der anderen modularen Leitung hat, wobei ein erster zylindrischer Abschnitt mit einer glatten Innenfläche (21) und ein zweiter Innengewindeabschnitt (17) so ausgebildet sind, dass sie mit den Gewindeabschnitt (15) des männlichen Verbindungsteils in Eingriff stehen; wobei die Dichtungsmittel (18) so ausgebildet sind, dass eine fluiddichte Abdichtung durch Druckkontakt gegen die glatte Innenfläche (21) des weiblichen Verbindungsteils (16) zwischen einer minimalen Verschraubungsposition und einer maximalen Verschraubungsposition des männlichen Teils (14) in den weiblichen Teil (16) bereitgestellt wird.

5. Zusammensetzbare Rohrleitung gemäß einem der vorangegangenen Ansprüche, wobei die luftdichten Dichtungsmittel (18) einen Dichtungsring (19) umfassen.

6. Zusammensetzbare Rohrleitung (10) gemäß Anspruch 5, wobei der Dichtungsring (19) aus elastisch verformbarem Material, vorzugsweise aus Kunststoff oder wärme-, kondensatbeständigem Siliconkautschuk hergestellt ist.

7. Zusammensetzbare Rohrleitung (10) gemäß Anspruch 6, wobei der Dichtungsring (19) mindestens eine umlaufende Rippung aufweist, wobei die Rippung einen Außendurchmesser hat, der größer als der Innendurchmesser des weiblichen offenen Endes (20) ist.

8. Zusammensetzbare Rohrleitung (10) gemäß einem der vorangegangenen Ansprüche, wobei das Gewinde (15) des männlichen Teils (14) der modularen röhrenförmigen Leitungen (11, 211) in der Schichtdicke des männlichen Endes (14) selbst ausgebildet ist, wobei die Unterseite des Gewindes (15) einen Durchmesser aufweist, der geringer als der Außendurchmesser des männlichen Endes (14) ist.

9. Zusammensetzbare Rohrleitung (10) gemäß einem der Ansprüche 1 bis 7, wobei das Gewinde (115) des männlichen Verbindungsteils (114) außerhalb des männlichen Teils (114) selbst ausgebildet ist.

10. Zusammensetzbare Rohrleitung gemäß einem der vorangegangenen Ansprüche, wobei der männliche Verbindungsteil (14) der modularen Leitung in den weiblichen Teil (16) der anderen modularen Leitung zwischen der minimalen Verschraubungsposition und der maximalen Verschraubungsposition in einem Winkel von mindestens 270°, vorzugsweise 360°, geschraubt werden kann.

11. Zusammensetzbare Rohrleitung gemäß einem der vorangegangenen Ansprüche, wobei die zusammensetzbare Rohrleitung ein Abgasrohr ist.

## Revendications

1. Tuyauterie composable, comportant une pluralité de conduits modulaires (11, 111, 211, 311) avec un système de raccordement étanche aux fluides, dans laquelle chacun desdits conduits modulaires a une partie d'accouplement mâle (14) et une partie d'accouplement femelle (16), ayant une partie filetée mâle (15) et une partie filetée femelle (17) respectives adaptées pour assurer une prise mécanique entre les conduits modulaires, **caractérisé en ce qu'**elle comporte des moyens d'étanchéité (18) adaptés pour créer un joint étanche aux fluides entre la partie d'accouplement mâle (14) d'un premier conduit modulaire générique et la partie d'accouplement femelle (16) d'un second conduit modulaire raccordé audit premier conduit modulaire, et adaptés pour maintenir ledit joint étanche aux fluides entre une position de vissage minimal et une position de vissage maximal de la partie mâle (14) dudit premier conduit modulaire dans la partie femelle (16) dudit second conduit modulaire, et dans laquelle deux modules adjacents peuvent être librement tournés au niveau du raccord étanche aux fluides, entre lesdites positions de vissage maximal et minimal, sans affecter l'étanchéité aux fluides.

2. Tuyauterie composable selon la revendication 1, dans laquelle lesdits moyens d'étanchéité (18) sont associés à la partie d'accouplement mâle (14) de chaque conduit modulaire.

3. Tuyauterie composable selon la revendication 2, dans laquelle lesdits moyens d'étanchéité (18) sont situés sur le fond de la partie filetée (15) de la partie mâle (14) de chaque conduit modulaire (11, 111, 211, 311), entre une partie de corps centrale (12, 112, 212, 312) du conduit modulaire et ladite partie filetée (15) de celui-ci.

4. Tuyauterie composable selon la revendication 2 ou 3, dans laquelle la partie d'accouplement femelle (16) de chaque conduit modulaire a une extrémité ouverte (20) pour recevoir la partie d'accouplement mâle (14) d'un autre conduit modulaire, une première partie cylindrique avec une surface lisse intérieure (21), et une seconde partie filetée intérieure (17) adaptée pour venir en prise avec la partie filetée (15) de ladite partie d'accouplement mâle, lesdits moyens d'étanchéité (18) étant adaptés pour créer un joint étanche aux fluides par un contact par pression contre ladite surface lisse intérieure (21) de la partie femelle (16), entre une position de vissage minimal et une position de vissage maximal de ladite partie mâle (14) dans ladite partie femelle (16).

5. Tuyauterie composable selon l'une quelconque des revendications précédentes, dans laquelle lesdits moyens d'étanchéité hermétiques (18) comportent une garniture annulaire (19).

6. Tuyauterie composable (10) selon la revendication 5, dans laquelle ladite garniture annulaire (19) est constituée d'un matériau élastiquement déformable, de préférence une matière plastique ou un caoutchouc de silicone résistant aux condensats, à haute température.

7. Tuyauterie composable (10) selon la revendication 6, dans laquelle ladite garniture annulaire (19) a au moins une nervure circonférentielle, ladite nervure ayant un diamètre extérieur plus grand que le diamètre intérieur de l'extrémité ouverte femelle (20).

8. Tuyauterie composable (10) selon l'une quelconque des revendications précédentes, dans laquelle le filetage (15) de la partie mâle (14) desdits conduits tubulaires modulaires (11, 211) est formé dans l'épaisseur de l'extrémité mâle (14) elle-même, le fond dudit filetage (15) ayant un diamètre plus petit que le diamètre extérieur de l'extrémité mâle (14).

9. Tuyauterie composable (10) selon l'une quelconque des revendications 1 à 7, dans laquelle le filetage (115) de la partie d'accouplement mâle (114) est formé à l'extérieur de la partie mâle (114) elle-même.

10. Tuyauterie composable selon l'une quelconque des revendications précédentes, dans laquelle la partie d'accouplement mâle (14) d'un conduit modulaire peut être vissée dans la partie femelle (16) d'un autre conduit modulaire, entre ladite position de vissage minimal et ladite position de vissage maximal, d'un angle d'au moins 270 °, de préférence 360 °.

11. Tuyauterie composable selon l'une quelconque des revendications précédentes, ladite tuyauterie composable étant un tuyau d'évacuation de fumées.
